# EUROPÄISCHE PATENTSCHRIFT

(11) **EP 2 028 982 B1**
(45) Veröffentlichungstag und Bekanntmachung des Hinweises auf die Patenterteilung: **07.10.2009**
(21) Anmeldenummer: 07765283.2
(22) Anmeldetag: 25.05.2007
(51) Int. Cl.: A47J 31/40, A47J 31/44

(54) **BEWEGLICHES FENSTER AM KAFFEEGERÄTEGEHÄUSE**
MOVABLE WINDOW ON A COFFEE MACHINE HOUSING
FENÊTRE MOBILE SUR BOÎTIER DE MACHINE À CAFÉ

(30) Priorität: 31.05.2006 DE 102006025419
(43) Veröffentlichungstag der Anmeldung: 04.03.2009
(73) Patentinhaber: BSH Bosch und Siemens Hausgeräte GmbH, 81739 München (DE)
(72) Erfinder: CRUMP, Nicole, 83278 Traunstein (DE); MEYER, Brigitte, 83339 Chieming (DE); SCHWAMKRUG, Christian, 5700 Zell am See (AT)
(86) Internationale Anmeldenummer: PCT/EP2007/055111
(87) Internationale Veröffentlichungsnummer: WO 2007/138016

(56) Entgegenhaltungen:
- WO-A-03/086157
- WO-A-20/05072579
- US-A1- 2006 037 483

## Beschreibung

Die Erfindung betrifft eine Kaffeemaschine für die Zubereitung von Kaffeegetränken mittels Portionen abgepackten gemahlenen Kaffees, mit einem Brühabschnitt zur Eluation der Kaffeeportion, einem dem Brühabschnitt vorgelagerten Beladeabschnitt zum Einsetzen der Kaffeeportion auf einen Halter als Teil einer Brühkammer oder zur Zufuhr der Portion zu einer Brühkammer.

Unter der Marke "Nespresso" hat sich ein System im Markt etabliert, das einen gleich bleibend guten Kaffeegenuss bei geringem Aufwand dafür verspricht. Neben einer neuartigen Technik der Kaffeezubereitung mittels in Kapseln abgepackter Portionen gemahlenen Kaffees bietet das System auch die dafür erforderlichen Kaffeemaschinen in unterschiedlichsten Ausführungen und Dienstleistungen rund um den Genuss von Kaffeegetränken, den Service an den Maschinen und die Auswahl und Lieferung der Kaffeekapseln an. Hohe Aufmerksamkeit wird innerhalb dieses Systems der Ausstattung der Maschinen gewidmet. Ein Programm an sehr verschiedenartigen Maschinentypen deckt die gesamte Bandbreite von einfach und überwiegend manuell zu bedienenden Geräten bis hin zu hochpreisigen und vollautomatischen Einbaugeräten ab. Um eine möglichst große Bandbreite an potentiellen Interessenten anzusprechen, werden die Geräte zudem mit traditionellen bis hin zu futuristischen Designs angeboten. Dieselbe Technologie soll in möglichst unterschiedliche Gewänder gekleidet werden, wobei auch die Bedienung der Geräte trotz grundsätzlich identischer Technik stark voneinander abweicht. Sie soll bereits Exklusivität ausstrahlen. So werden die Geräte der "Classic Line" wie herkömmliche Espressomaschinen gestaltet und durch Einsetzen der Kapsel in eine Art Siebträger bedient. Geräte der "Compact Line" werden demgegenüber von einer Oberseite her beladen, während die "Concept Line" mit einem für Kaffeeautomaten ungewöhnlichen Design aufwartet und das Aufklappen eines kalottenförmigen Gehäuseteils erfordert.

Dokument WO-A-03/086157 offenbart eine Kaffeemaschine nach dem Oberbegriff des unabhängigen Anspruchs 1.

Vor diesem Hintergrund ist es Aufgabe der Erfindung, eine neuartige Gestaltungsmöglichkeit des Beladeabschnitts, dem die Hauptaufmerksamkeit des Benutzers gilt, zu bieten.

Zur Lösung dieser Aufgabe weist eine Kaffeemaschine der eingangs genannten Art einen Verschluss zum Verschließen des Beladeabschnitts auf. Der Verschluss ist dabei nicht ein Teil des druckbeaufschlagten Brühabschnitts, der aus Funktions- und Sicherheitsgründen druckdicht und fest verschlossen sein muss. Er verschließt einen dem Brühabschnitt vorgelagerten, für den Bediener leicht zugänglichen Beladeabschnitt zum Einsetzen der Kaffeeportion. Der Verschluss hat damit also keine funktionelle Bedeutung für den weiteren Ablauf des Kaffeezubereitungsprozesses. Er deckt vielmehr den sensiblen und verschmutzungsempfindlichen Beladeabschnitt ab, um eine Beeinträchtigung des Zubereitungsergebnisses durch Verschmutzung oder eine Beeinträchtigung der Funktionsteile zu verhindern.

Ein allgemeines Designkonzept besteht darin, den Arbeitsvorgang eines Gerätes von außen durch ein geschlossenes Gehäuse hindurch sichtbar zu machen. Nach einer weiteren vorteilhaften Ausgestaltung der Erfindung ist der Verschluss daher zumindest teilweise durchsichtig ausgebildet. Der Benutzer kann also die hinter dem Verschluss ablaufenden Vorgänge dennoch mitverfolgen. Damit kann einerseits das Interesse des Benutzers auf die Kaffeemaschine gelenkt und andererseits das Bedürfnis insbesondere von Kindern, den Verschluss während des Betriebs der Maschine zu öffnen, verringert werden.

Nach einer ersten Ausführungsmöglichkeit besteht der durchsichtige Verschluss aus einem transluzenten Material, zum Beispiel aus Kunststoff. Der Verschluss kann mit einer durchgehenden, geschlossenen Oberfläche ausgeführt werden, so dass er sich zumindest der Form nach in das Design des übrigen Gerätegehäuses einfügen kann. Seine Oberfläche kann vielfältig mit Designelementen bedruckt werden, um sich auch farblich in das gestalterische Konzept der Kaffeemaschine einzufügen, und/oder beschriftet werden. Insbesondere Kunststoff bietet die Möglichkeit zur Ausbildung nahezu beliebiger Formen und Oberflächengestaltungen, womit kaum gestalterische Grenzen für den Verschluss gesetzt sind.

Eine alternative Ausführungsform der Erfindung weist als Verschluss eine gitterartige Struktur auf. Sie kann ebenfalls aus Kunststoff oder auch aus Metall bestehen. Auch sie bietet nahezu unbeschränkte Formenmöglichkeiten bei nahezu identischer Funktion. Im Gegensatz zur oben genannten Ausführungsform bietet sie jedoch nicht die Gefahr, von einer dem Gerätegehäuse zugewandten und daher schlecht oder gar nicht zugänglichen Rückseite zu verstauben oder bei Austreten von Wasserdampf zu beschlagen. Zudem stellt die Gitterstruktur selbst ein auffälliges Designelement dar.

Um von seiner verschließenden Position in eine Öffnungsposition und umgekehrt verbracht zu werden, muss der Verschluss bewegt werden. Dies kann grundsätzlich manuell geschehen, wofür an dem Verschluss ein Griff oder eine Bedienfläche vorzusehen ist. Nach einer vorteilhaften Ausgestaltung der Erfindung besteht das Bedienungselement für den Verschluss aus einer Taste oder einem optischen Sensor, über den eine automatische Betätigung des Verschlusses ausgelöst werden kann. Dadurch ist die Bedienung des Verschlusses unabhängig vom Kraftaufwand des Bedieners möglich. Ein optischer Sensor als Bedienungselement für den Verschluss unterstützt zudem den Eindruck einer aufwendigen Geräteausstattung.

Nach einer weiteren vorteilhaften Ausgestaltung der Erfindung deckt der Verschluss neben der Beladeöffnung auch Bedienungseinrichtungen der Kaffeemaschine mit ab. Bedienungseinrichtungen der Kaffeemaschine sind zum Beispiel Tasten zur Getränkewahl oder zur Vornahme von Servicevorgängen. Sind sie abgedeckt, so macht die Kaffeemaschine einen optischen hochwertigeren und flächigeren Eindruck. Diese Gestaltung kommt dem derzeitigen modernen Design entgegen. Zudem verringert es die Gefahr der Verstellung der Kaffeemaschine insbesondere durch neugierige Kinderfinger.

Nach einer weiteren vorteilhaften Ausgestaltung der Erfindung ist der Verschluss motorisch verfahrbar; dadurch fällt eine Bedienungseinrichtung für eine manuelle Bedienung weg und der Verschluss kann filigraner ausgebildet werden, weil er nicht auf eine unbedachte Bedienung ausgelegt werden muss. Bei einer automatischen Betätigung des Verschlusses, zum Beispiel durch einen Elektromotor, ist der dafür erforderliche Kraftaufwand bekannt. Sein Energieverbrauch soll selbstverständlich gering gehalten werden. Dies kann dadurch erreicht werden, dass der Verschluss möglichst leicht und leichtgängig konstruiert ist. Diese Zielsetzung harmoniert wiederum mit einem transparenten Verschluss, der sowohl mechanisch als auch optisch einen leichten Eindruck hinterlässt. Eine elektromotorische Bedienung macht außerdem noch einen werthaltigeren Eindruck und wird daher wohl überwiegend bei hochpreisigen Geräten zum Einsatz kommen.

Nach einer weiteren vorteilhaften Ausgestaltung der Erfindung weist der Verschluss eine der Gehäuseformen der Kaffeemaschine angepasste Form auf. Er fügt sich damit in die Silhouette der Kaffeemaschinen ein, ohne wie ein Fremdkörper wahrgenommen zu werden. Dadurch macht die Kaffeemaschine einen geschlosseneren und kompakteren Eindruck.

Nach einer weiteren vorteilhaften Ausgestaltung der Erfindung ist der Verschluss des Beladeabschnitts gehäuseparallel bewegbar. Insbesondere bei einem flächigen Bauteil für den Verschluss, wie zum Beispiel einer Klappe oder Tür, ist diese Bewegung besonders Platz sparend, weil sie, sofern gehäuseaußenseitig verfahren, nur unwesentlich mehr Raum als die unmittelbaren Geräteabmessungen beansprucht. Eine gehäusenahe Bewegung des Verschlusses verringert auch die Gefahr einer Beschädigung, zum Beispiel durch eine unbedachte Bewegung des Benutzers, und macht einen eleganteren Eindruck. Wird der Verschluss innerhalb des Gehäuses verfahren, minimiert eine gehäuseparallele Bewegbarkeit den zusätzlichen Platzbedarf.

Das Prinzip der Erfindung wird im Folgenden anhand einer Zeichnung beispielshalber noch näher erläutert. In der Zeichnung zeigen:
- Figur 1:: eine Frontansicht einer Kaffeemaschine mit geöffnetem Verschluss,
- Figur 2:: eine Frontansicht des Gerätes bei verschlossenem Verschluss.

Die Kaffeemaschine in den Figuren hat ein im Wesentlichen zylindrisches Gehäuse 1, dessen Mantelfläche auf der dem Benutzer zugewandten Bedienungsseite durch einen über die gesamte Gehäusehöhe senkrecht verlaufenden Bedienungsabschnitt 2 unterbrochen ist. Er ist vertikal untergliedert in einen Einschenkabschnitt 3 und einen darüber angeordneten Beladeabschnitt 4. Eine Heizfläche 5 als Stirnfläche, auf der Tassen abgestellt und vorgewärmt werden können, deckt das Gerätegehäuse 1 ab. Ein Anzeigeabschnitt 6 über dem Beladeabschnitt 4 ragt über das Gerätegehäuse 1 hinaus.

Der Einschenkabschnitt 3 umfasst ein Fach 7, in das eine Tassenabstellablage samt Flüssigkeitsauffangbehälter eingeschoben werden kann, die über die Kontur des Gehäuses 1 hinaus vorspringt. Eine auf der Tassenabstellfläche abgestellte Tasse findet sich dann unmittelbar unterhalb eines Auslaufs 8, aus dem das zubereitete Kaffeegetränk in die Kaffeetasse eingeschenkt wird.

Der Beladeabschnitt 4 liegt im Wesentlichen innerhalb des zylindrischen Gehäuses 1 und umfasst einen Halter 9, in den eine Kapsel für gemahlenen Kaffee eingesetzt werden kann. Dahinter ragt senkrecht eine Klappe 10 auf, die den Brühbereich der Kaffeemaschine verdeckt. Oberhalb des Beladeabschnitts 4 sind über seine ganze Breite Bedienungselemente 11 angeordnet, mit denen die Funktionen der Kaffeemaschine ausgewählt und in Gang gesetzt werden können. Außerhalb des Beladeabschnitts 4, vorzugsweise rechts daneben, ist am Gehäuse 1 ein nicht dargestellter Ein-/Aus-Schalter für die Kaffeemaschine angeordnet.

Über seine ganze Breite und links neben dem Beladeabschnitt 4 verlaufen zwei Schienen 13 in Umfangsrichtung des Gehäuses 1 parallel zueinander, in denen eine verfahrbare Tür 14 als Verschluss des Beladeabschnitts 4 geführt ist. Die Tür 14 folgt in ihrer Gestalt im Wesentlichen der des zylindrischen Gehäuses 1, besteht also aus einer einfach gekrümmten Fläche, deren Krümmungsradius geringfügig größer als der des Mantels des Gehäuses 1 ist. Entlang den Schienen 13 ist die Tür 14 über den Umfang des Gehäuses 1 gehäuseparallel verschiebbar angebracht. Sie wird über eine Zahnstange von einem Elektromotor im Innern des Gehäuses 1 angetrieben.

Um ein Kaffeegetränk zu erhalten, setzt der Benutzer eine Kaffeeportions-Kapsel in den Halter 9 ein. Nach Auswahl des gewünschten Kaffeegetränks über eines der Bedienungselemente 11 fährt nun der Halter 9 radial gegen das Innere des Gehäuses 1 ein, nachdem ihm die Klappe 10 durch Wegschwenken diesen Weg in diesen Brühbereich der Kaffeemaschine freigemacht hat. Daraufhin verschließt die Klappe 10 den Brühbereich wieder. Für den Benutzer unsichtbar erfolgen nun die Extraktion und weitere Zubereitung des Kaffeegetränks, bis es die Kaffeemaschine aus dem Auslauf 8 in eine bereitgestellte Tasse wieder verlässt.

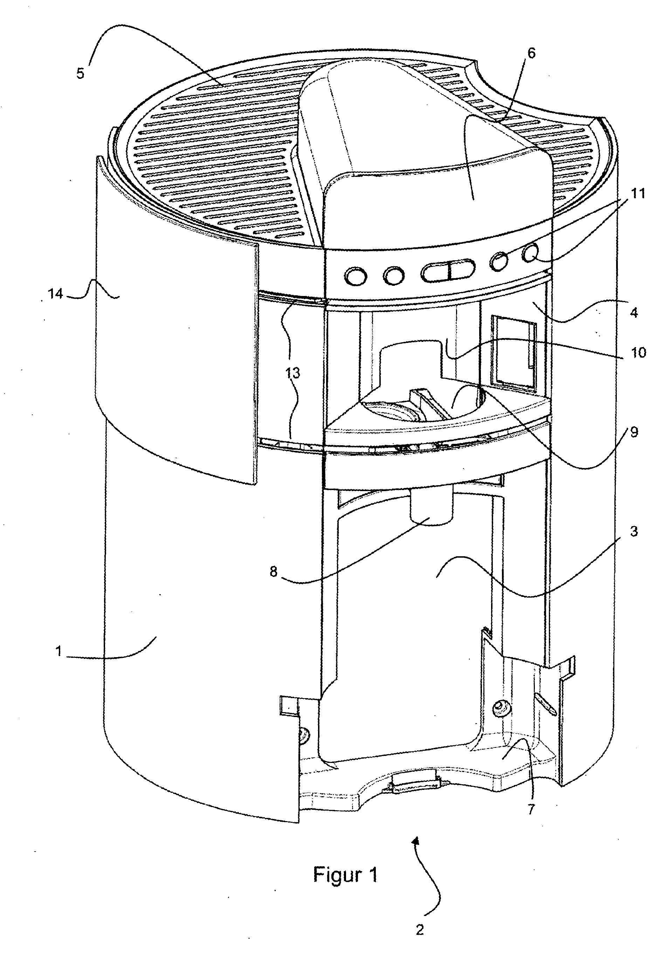

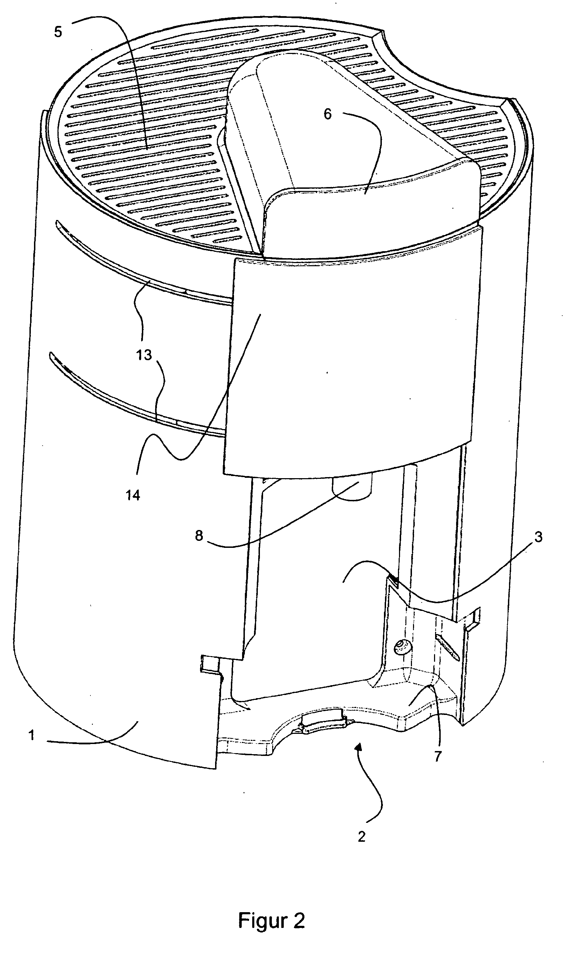

Dieser Vorgang kann entweder frei einsehbar oder durch die Tür 14 geschützt ablaufen. Dazu fährt die Tür 14 aus der in Figur 1 dargestellten geöffneten Position in die in Figur 2 dargestellte geschlossene Position. Dabei verdeckt die Tür 14 nicht nur den Beladeabschnitt 4 selbst, so dass eine Manipulation im Bereich des Halters 9 oder der Klappe 10 insbesondere im Betrieb nicht mehr möglich ist. Sie schiebt sich vielmehr auch vor die Bedienungselemente 11. Damit ist also der Zugriff des Benutzers darauf vorübergehend verwehrt, damit der Zubereitungsprozess nicht durch Fehlbedienungen gestört wird. Soll der Benutzer dennoch die Vorgänge verfolgen können, die sich seinem unmittelbaren Einfluss entzogen hinter der Tür 14 abspielen, so kann sie durchsichtig ausgeführt werden.

Zur Bedienung der Tür 14 sind keine Bedienungselemente an ihr selbst erforderlich, weil sie motorisch bedient wird. In dem Anzeigenabschnitt 6 ist dazu ein Bewegungssensor untergebracht, der bei Annäherung eines Benutzers an die Kaffeemaschine und dessen Hantieren im unmittelbaren Nahbereich des Bedienungsabschnitts 2 sensiert und daraufhin die Tür 14 selbsttätig öffnet. Jetzt ist das Beladen der Kaffeemaschine mit einer frischen Kaffeeportion möglich. Soll der darauf folgende Vorgang ungeschützt und einsehbar ablaufen, so kann die Tür 14 für den weiteren Prozess in ihrer Öffnungsstellung verharren. Soll dagegen ein Schutz vorgesehen werden, so kann ein weiterer Sensor, zum Beispiel ein Drucksensor im Bereich des Halters 9, die eingesetzte Kapsel detektieren oder die Getränkewahl über eines der Bedienungselemente ein Verfahren der Tür 14 veranlassen.

Nach Abschluss eines Kaffeebrühvorgangs, bei dem die leere Kapsel automatisch in einen Auffangbehälter innerhalb des Geräts ausgeworfen wird, kann die Tür 14 geschlossen bleiben oder sich auch programmgesteuert für die Zubereitung eines weiteren Getränkes wieder öffnen. Nach Betätigung des Ein-/Aus-Schalters schließt sich die Tür 14 programmgesteuert und schützt damit den Beladeabschnitt 4 bei nicht benutzter Kaffeemaschine vor Verschmutzung und vor unbefugten Manipulationen.

Auch im geschlossenen Zustand steht die Tür 14 vom zylindrischen Gehäuse 1 geringfügig ab. Außerdem ist sie breiter ausgebildet als der Bedienungsabschnitt 2, der mit dem Einschenkabschnitt 3, dem Beladeabschnitt 4 und dem Anzeigeabschnitt 6 durchgehende senkrechte Mantellinien bildet. Die Tür 14 ist also optisch und tatsächlich gegenüber dem zylindrischen Gehäuse 1 abgehoben, was durch eine weitere Gestaltung hinsichtlich Material und Bedruckung noch verstärkt werden kann. Damit wird dieser Bereich der Kaffeemaschine, der für die Bedienung der Kaffeemaschine für den Benutzer von zentraler Bedeutung ist, auch optisch blickfangartig betont.

Da es sich bei der vorhergehenden, detailliert beschriebenen Tür um ein Ausführungsbeispiel handelt, kann es in üblicher Weise vom Fachmann in einem weiten Umfang modifiziert werden, ohne den Bereich der Erfindung zu verlassen. Insbesondere kann die konkrete Ausgestaltung der Tür in anderer Form als in der hier beschriebenen folgen, zum Beispiel kann sie innerhalb des Gehäuses geführt oder als Klappe ausgeführt werden, wenn dies aus Platz- bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1 -: Gehäuse
- 2 -: Bedienungsabschnitt
- 3 -: Einschenkabschnitt
- 4 -: Beladeabschnitt
- 5 -: Heizfläche
- 6 -: Anzeigeabschnitt
- 7 -: Fach
- 8 -: Auslauf
- 9 -: Halter
- 10 -: Klappe
- 11 -: Bedienungselemente
- 13 -: Schienen
- 14 -: Tür

## Patentansprüche

1. Kaffeemaschine für die Zubereitung von Kaffeegetränken mittels Portionen abgepackten gemahlenen Kaffees, mit einem Brühabschnitt zur Eluation der Kaffeeportion, einem dem Brühabschnitt vorgelagerten Beladeabschnitt (4) zum Einsetzen der Kaffeeportion auf einen Halter (9) als Teil einer Brühkammer oder zur Zufuhr der Portion zu einer Brühkammer, **gekennzeichnet durch** einen Verschluss (14) zum Verschließen des Beladeabschnitts (4).

2. Kaffeemaschine nach Anspruch 1, **dadurch gekennzeichnet, dass** der Verschluss (14) zumindest teilweise durchsichtig ist.

3. Kaffeemaschine nach Anspruch 1 oder 2, **dadurch gekennzeichnet, dass** der Verschluss (14) aus einem transluzenten Material, insbesondere Kunststoff, besteht.

4. Kaffeemaschine nach Anspruch 1 oder 2, **dadurch gekennzeichnet, dass** der Verschluss (14) eine gitterartige Struktur aufweist.

5. Kaffeemaschine nach einem der Ansprüche 1 bis 3 mit einer Taste oder einem optischen Sensor als Bedienungselement für den Verschluss (14).

6. Kaffeemaschine nach einem der Ansprüche 1 bis 5, **dadurch gekennzeichnet, dass** der Verschluss (14) Bedienungseinrichtungen (11) der Kaffeemaschine abdeckt.

7. Kaffeemaschine nach einem der Ansprüche 1 bis 6, **dadurch gekennzeichnet, dass** der Verschluss (14) motorisch verfahrbar ist.

8. Kaffeemaschine nach einem der Ansprüche 1 bis 7, **dadurch gekennzeichnet, dass** der Verschluss (14) eine der Gehäuseform der Kaffeemaschine angepasste Form aufweist.

9. Kaffeemaschine nach einem der Ansprüche 1 bis 8, **dadurch gekennzeichnet, dass** der Verschluss (14) des Beladeabschnitts (4) gehäuseparallel bewegbar ist.

## Claims

1. Coffee machine for the brewing of coffee beverages by means of portions of packed ground coffee, with a brewing section for elution of the coffee portion, a charging section (4), which is upstream of the brewing section, for insertion of the coffee portion on a holder (9) as part of a brewing chamber or for feed of the portion to a brewing chamber, **characterised by** a closure (14) for closing the charging section (4).

2. Coffee machine according to claim 1, **characterised in that** the closure (14) is at least partly transparent.

3. Coffee machine according to claim 1 or 2, **characterised in that** the closure (14) consists of a translucent material, particularly plastics material.

4. Coffee machine according to claim 1 or 2, **characterised in that** the closure (14) has a grid-like structure.

5. Coffee machine according to any one of claims 1 to 3 with a button or an optical sensor as control element for the closure (14).

6. Coffee machine according to any one of claims 1 to 5, **characterised in that** the closure (14) covers control devices (11) of the coffee machine.

7. Coffee machine according to any one of claims 1 to 6, **characterised in that** the closure (14) is movable by motor.

8. Coffee machine according to any one of claims 1 to 7, **characterised in that** the closure (14) has a shape matched to the housing shape of the coffee machine.

9. Coffee machine according to any one of claims 1 to 8, **characterised in that** the closure (14) of the loading section (4) is movable parallel to the housing.

## Revendications

1. Machine à café destinée à la préparation de boissons de café au moyen de café moulu empaqueté en portions, comprenant une section d'infusion pour l'élution de la portion de café, une section de chargement (4) située en amont de la section d'infusion, destinée à insérer la portion de café sur un support (9), en tant que partie d'une chambre d'infusion ou destinée à amener la portion vers une chambre d'infusion, **caractérisée par** une fermeture (14) destinée à fermer la section de chargement (4).

2. Machine à café selon la revendication 1, **caractérisée en ce que** la fermeture (14) est au moins en partie transparente.

3. Machine à café selon la revendication 1 ou 2, **caractérisée en ce que** la fermeture (14) est constituée d'une matière translucide, notamment en matière plastique.

4. Machine à café selon la revendication 1 ou 2, **caractérisée en ce que** la fermeture (14) présente une structure en forme de grille.

5. Machine à café selon l'une quelconque des revendications 1 à 3, comprenant une touche ou un capteur optique en tant qu'élément de commande pour la fermeture (14).

6. Machine à café selon l'une quelconque des revendications 1 à 5, **caractérisée en ce que** la fermeture (14) recouvre des dispositifs de commande (11) de la machine à café.

7. Machine à café selon l'une quelconque des revendications 1 à 6, **caractérisée en ce que** la fermeture (14) est déplaçable de manière motorisée.

8. Machine à café selon l'une quelconque des revendications 1 à 7, **caractérisée en ce que** la fermeture (14) présente une forme adaptée à la forme du boîtier de la machine à café.

9. Machine à café selon l'une quelconque des revendications 1 à 8, **caractérisée en ce que** la fermeture (14) de la section de chargement (4) est déplaçable parallèlement au boîtier.
